# FASCICULE DE BREVET EUROPEEN

(11) **EP 1 762 162 B1**
(45) Date de publication et mention de la délivrance du brevet: **15.07.2015**
(21) Numéro de dépôt: 06356109.6
(22) Date de dépôt: 08.09.2006
(51) Int. Cl.: A47J 31/40, A47J 42/48

(54) **Doseur de cafe, et ensemble de distribution de cafe broye comprenant au moins un tel doseur**
Kaffee-Dosierer und Baugruppe zur Ausgabe vom gemahlenen Kaffee mit Dosierer
Coffee dosing device and ground coffee distributing assembly with dosing device

(30) Priorité: 09.09.2005 FR 0509221
(43) Date de publication de la demande: 14.03.2007
(73) Titulaire: SANTOS, 69120 Vaulx en Velin (FR)
(72) Inventeur: Fouquet, Nicolas, 69003 Lyon (FR)
(74) Mandataire: Grand, Guillaume

(56) Documents cités:
- CH-A- 393 654
- FR-A- 2 049 417
- FR-A- 2 855 384

## Description

La présente invention concerne un doseur de café, ainsi qu'un ensemble de distribution de café broyé comprenant au moins un tel doseur.

De façon classique, un tel doseur de café est intégré à un moulin à café, généralement utilisé pour la préparation du café dit « EXPRESSO », comme par exemple dans le dispositif commercialisé par la Demanderesse sous la référence "Numéro 40A". Ce moulin à café comprend une réserve de café non broyé, qui peut être traité par des meules de broyage. Le café ainsi broyé se trouve délivré dans le doseur de café, où il est stocké.

Ce doseur comprend également un organe de détection de niveau, de type électromécanique, qui commande le broyage du café, puis l'arrivée du café broyé. Ce doseur de café comprend en outre, de façon classique, un organe de soutirage d'une dose de café broyé, associé à un tasseur, ainsi qu'un compteur permettant de comptabiliser le nombre de doses distribuées.

Le document EP-A-0 516 168 décrit toutes les caractéristiques du préambule de la revendication 1 annexée.

Ceci étant précisé, l'invention vise à proposer un doseur de café qui est amélioré par rapport à l'état de la technique évoqué ci-dessus, en particulier en termes de facilité d'utilisation.

A cet effet, elle a pour objet un ensemble de distribution de café broyé selon la revendication 1 annexée.

D'autres caractéristiques de l'invention font l'objet des revendications dépendantes.

L'invention sera mieux comprise et d'autres avantages de celle-ci apparaîtront plus clairement à la lumière de la description qui va suivre d'un mode de réalisation d'un doseur de café conforme à son principe, donnée uniquement à titre d'exemple non limitatif et faite en référence aux dessins annexés, dans lesquels :
- la figure 1 est une vue en perspective, illustrant un doseur de café conforme à l'invention ;
- les figures 1A et 1B sont des vues à plus grande échelle, illustrant des moyens de verrouillage rapide dont est pourvu le doseur de la figure 1 ;
- les figures 2 et 3 sont des vues en perspective, selon des angles différents, illustrant un support propre à coopérer avec le doseur de café de la figure 1 ;
- les figures 4 et 5 sont des vues en perspective, illustrant le doseur de café de la figure 1, rapporté sur un support tel que celui des figures 2 et 3, dans deux présentations différentes ;
- la figure 4A est une vue en coupe longitudinale, illustrant plus précisément l'association du doseur et du support représentés tous deux à la figure 4 ;
- la figure 6 est une vue en perspective, illustrant un moulin à café propre à coopérer avec le doseur de la figure 1 ; et
- la figure 7 est une vue en perspective, illustrant le moulin à café de la figure 6 associé au doseur de la figure 1.

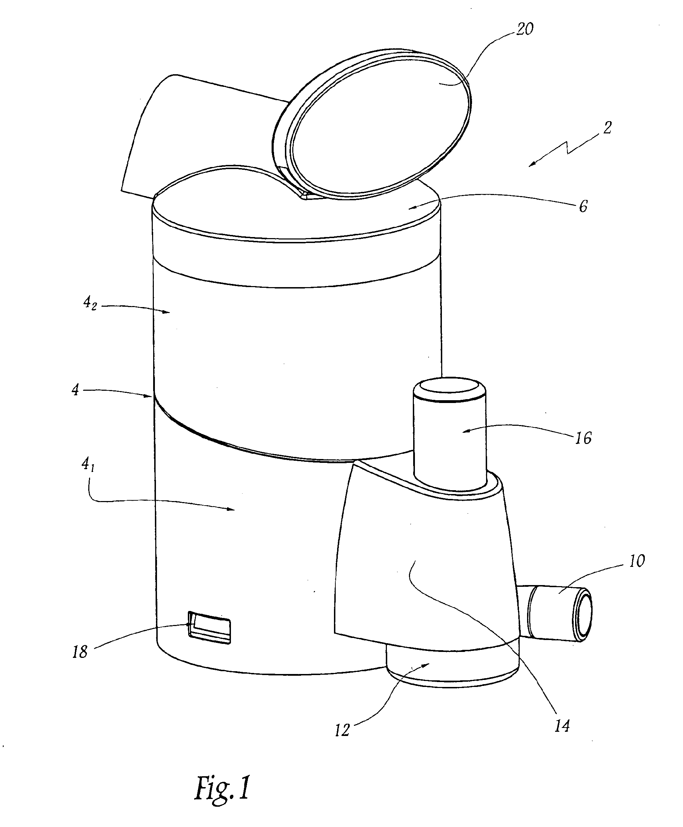

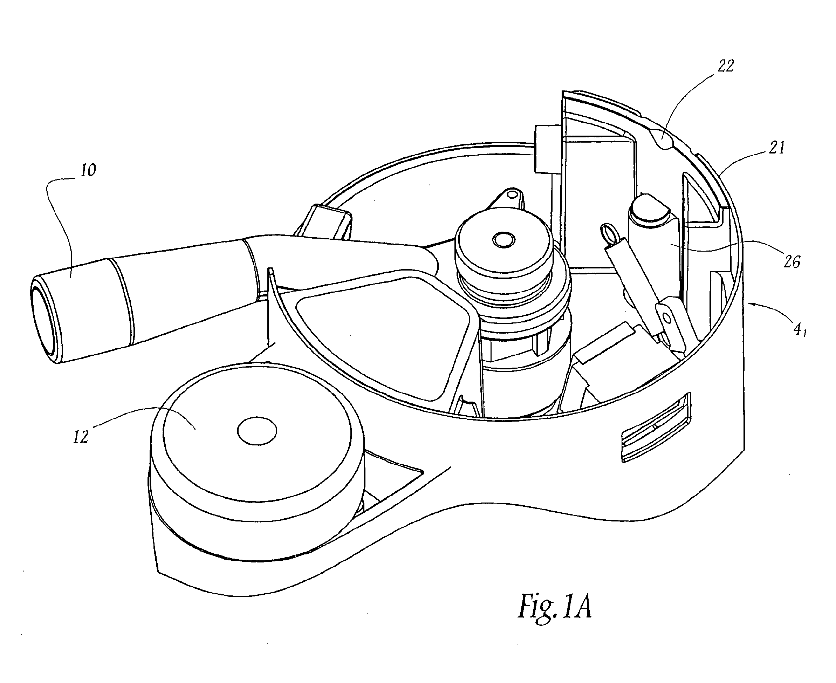

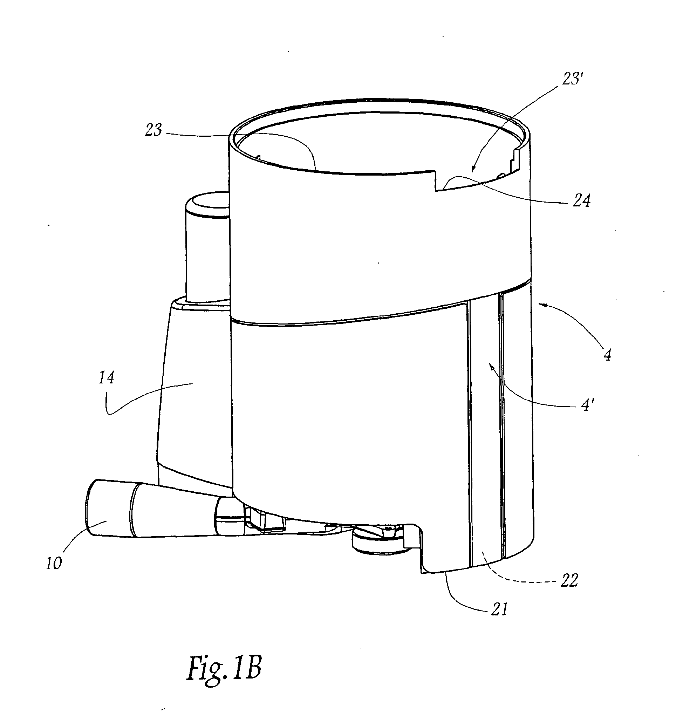

La figure 1 illustre un doseur de café conforme à l'invention, désigné dans son ensemble par la référence 2. Ce doseur 2 comporte tout d'abord un corps cylindrique 4, définissant un volume de réception de café, qui se compose d'une embase 4₁, réalisée par exemple en une matière plastique, recouverte d'un habillage extérieur en acier inoxydable, ainsi que d'une partie supérieure transparente 4₂, réalisée par exemple en une matière plastique ou en verre.

Ce corps 4 se trouve fermé, à sa partie supérieure, par l'intermédiaire d'un couvercle 6, alors que le doseur 2 est en outre équipé de moyens de soutirage d'une dose de café, qui sont de type connu en soi. Ces moyens de soutirage comportent en particulier une poignée 10, coopérant avec un système de croisillons non représenté, prévu au fond du corps 4.

Un tasseur de café 12, également de type connu en soi, est monté de façon fixe ou mobile sur un nez 14, faisant saillie frontalement par rapport au corps 4. Ce tasseur 12 est propre à être actionné par l'intermédiaire d'un poussoir 16, situé en partie supérieure du nez 14. Il est en outre prévu un compteur 18, permettant de visualiser le nombre de doses soutirées. De plus, un porte-étiquette 20 permet d'indiquer au consommateur la nature du café stocké dans le doseur 2.

On va maintenant décrire, en référence en particulier aux figures 1A et 1B, les moyens de verrouillage rapide dont est pourvu le doseur de l'invention.

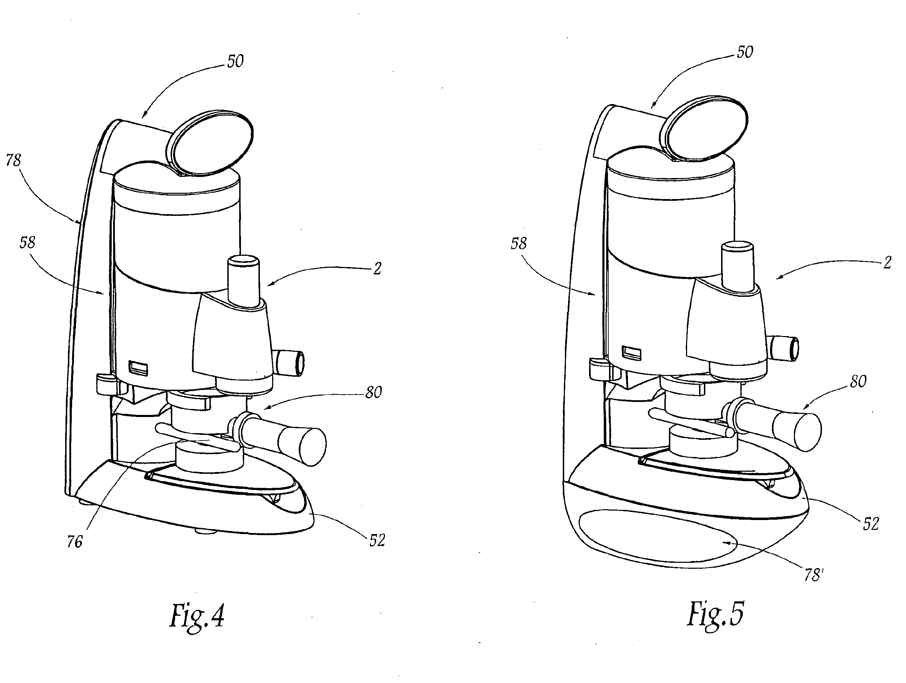

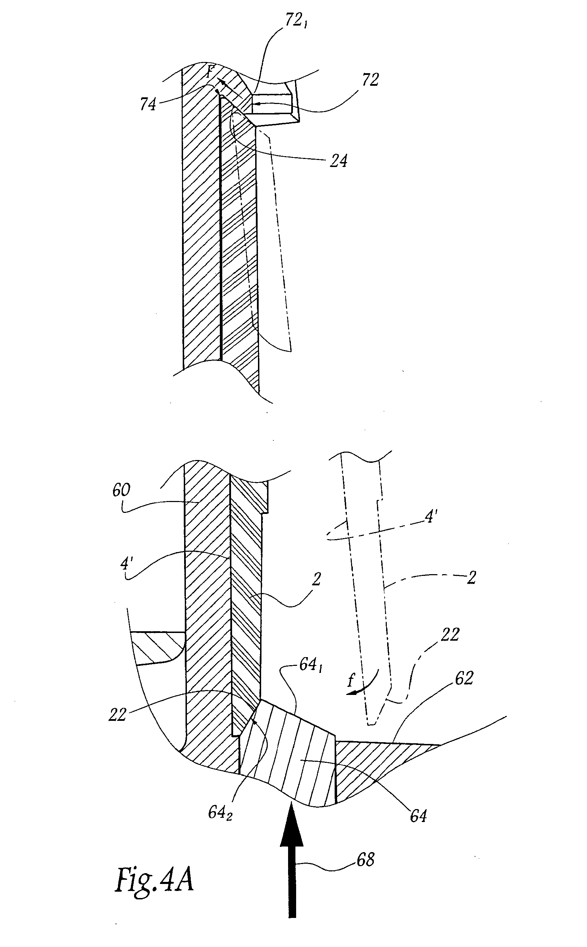

La figure 1A illustre tout d'abord le fond du doseur, dans une position retournée, alors que la partie transparente 4₂ n'est pas représentée. La paroi inférieure 21, en service, de l'embase 4₁ définit une butée 22, visible sur cette figure 1A. Comme on le verra plus en détail dans ce qui suit, en particulier en référence à la figure 4A, cette butée 22 forme une rampe oblique, destinée à coopérer avec un doigt, dont est équipé un support ou un moulin à café sur lequel peut être solidarisé le doseur de l'invention.

En référence désormais à la figure 1B, la paroi supérieure 23, en service, du corps 4 définit un décrochement 23', situé à l'aplomb de la butée 22. La paroi 24, délimitant la partie basse de ce décrochement 23', forme également une rampe oblique, comme on le verra plus en détail en référence à la figure 4A. Cette rampe oblique est propre à coopérer avec un élément de crochetage complémentaire, dont est pourvu le support ou le moulin à café, propre à être associé avec le doseur de l'invention.

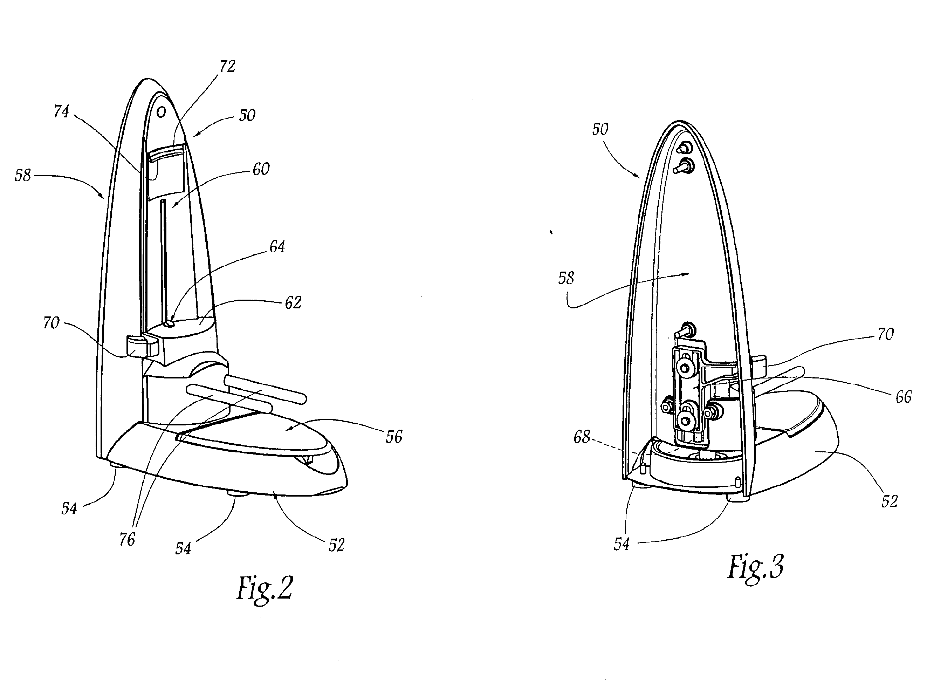

Les figures 2 et 3 illustrent, sous deux angles différents, un support propre à recevoir le doseur 2, décrit ci-dessus. Ce support, désigné dans son ensemble par la référence 50, comprend une embase horizontale 52, équipée de patins 54, ainsi que d'un réceptacle amovible 56, destiné de façon connue à récupérer les chutes de mouture de café. Cette embase 52 se prolonge par un dos vertical 58, sur lequel est rapportée de façon amovible une plaque 60, destinée à l'accrochage du doseur de café 2.

On notera que cette plaque 60 possède une forme cylindrique, qui est conjuguée de celle du corps 4 du doseur 2. Ainsi, en service, cette plaque 60 et la surface 4' du corps 4, visible notamment sur la figure 1B, qui repose alors contre cette plaque 60, assurent un maintien mutuel satisfaisant du doseur 2 et du support 50, même lorsque ces derniers sont soumis aux efforts, parfois importants, intervenant en service.

Cette plaque 60 est pourvue d'un doigt de verrouillage mobile 64, propre à être escamoté dans une plage horizontale 62, destinée notamment au guidage de la butée 22 en direction du doigt 64, comme on le verra dans ce qui suit. Ce doigt 64 est solidaire d'un chariot 66, illustré à la figure 3, qui est monté en partie arrière du dos 58, à l'encontre d'un ressort de rappel 68.

Il est en outre prévu un levier latéral 70, permettant de déverrouiller le doigt 64, à savoir de l'escamoter dans la plage 62. Au sommet de la plaque 60, un crochet 72 définit un interstice 74 permettant l'introduction de la rampe 24, dont est équipé le doseur 2. Enfin, ce support 50 est équipé de deux tiges 76, s'étendant horizontalement au voisinage du réceptacle amovible 56, de façon à recevoir un porte-filtre comme on le verra dans ce qui suit.

On va maintenant décrire le montage du doseur 2 sur le support 50, en particulier en référence à la figure 4A. Cette dernière illustre notamment la plaque 60, le doigt 64, le crochet 72, ainsi que le ressort 68 de façon schématique.

On notera tout d'abord que le crochet 72 possède une rampe oblique 72₁, le long de laquelle peut glisser la rampe oblique 24 du doseur 2. Par ailleurs, le doigt 64 est pourvu d'une première rampe oblique 64₁, opposée à la plaque 60, ainsi que d'une seconde rampe oblique 64₂, de plus forte pente, qui est tournée vers cette plaque. On notera que cette seconde rampe 64₂ et la rampe définie par la butée 22 du doseur 2, sont propres à glisser l'une par rapport à l'autre.

En vue du montage proprement dit du doseur 2 sur le support 50, il s'agit tout d'abord d'introduire la rampe 24 dans l'interstice 74, défini par le crochet 72, tout en maintenant le doseur en position oblique par rapport à la verticale, comme illustré en traits mixtes sur la figure 4A. On notera que cette rampe 24 et ce crochet 72 forment un ensemble de crochetage.

Puis, on fait basculer le doseur vers cette position verticale, selon la flèche f à la figure 4A. De la sorte, la paroi inférieure, munie de la butée 22, entre en contact avec la première rampe 64₁ du doigt 64, de façon à l'escamoter à l'intérieur de la plage 62. Une fois que cette butée 22 a franchi le sommet de ce doigt 64, elle glisse alors le long de l'autre rampe 64₂, de sorte que le ressort 68 rappelle progressivement le doigt 64 vers le haut. Au terme de ce mouvement, la surface 4' du doseur 2 se trouve au contact de la paroi en regard de la plaque 60, alors que la rampe 64₂ se trouve en regard de la butée 22.

A cet égard, on notera que l'action du ressort 68, combiné aux formes obliques complémentaires de la rampe 64₂ et de la butée 22, contribuent à repousser le doseur à la fois vers le haut, et en direction de la plaque 60. Ainsi, la rampe supérieure 24 tend également à glisser le long de la rampe 72₁ du crochet 72, vers le haut et à gauche en référence à la figure 4A (flèche F).

Par conséquent, la présence de ces différentes rampes obliques induit un maintien ferme en position du doseur par rapport au support, ce qui assure une fonction de rattrapage de jeu. En d'autres termes, ceci permet de s'affranchir d'éventuels écarts de cote, auxquels seraient soumis différents doseurs, susceptibles d'être associés de façon sélective sur la plaque 60 appartenant au support 50.

Si l'on veut déverrouiller le doseur 2, il s'agit d'actionner le levier 70, de manière à déplacer le chariot 66 vers le bas et, par conséquent, à escamoter le doigt 64 dans la plage 62. Il est alors possible de faire basculer le doseur 2 vers une position oblique, puis de dégager la languette 24 de l'interstice 74.

A cet égard, on notera que la présence du crochet 72 en partie haute du doseur, et du doigt 64 en partie basse, est avantageuse. En effet, en position intermédiaire de déverrouillage, à savoir lorsque le doseur ne coopère plus avec le doigt 64, la présence de ce crochet 72, associé à la rampe 24, évite une éventuelle chute accidentelle de ce doseur.

La figure 4 illustre l'ensemble formé du support 50 et du doseur 2, posé à plat sur une surface horizontale. La face arrière du support 50, opposée au doseur 2, est recouverte d'un habillage 78, réalisé par exemple en une matière plastique. On notera que cet habillage est propre à cacher les éléments visibles notamment sur la figure 3, à savoir entre autres le chariot 66 et le ressort 68. Sur cette figure 4, un porte-filtre 80, de type connu en soi, est posé sur les tiges 76 du support 50.

La figure 5 illustre une variante de réalisation de l'ensemble formé par le support 50 et le doseur 2. Sur cette figure, le support 50 est fixé sur une paroi verticale non représentée, telle qu'un mur, de sorte qu'il est dépourvu de l'habillage arrière 78. Ce dernier se trouve remplacé par un habillage 78', rapporté à l'extrémité inférieure de l'embase 52.

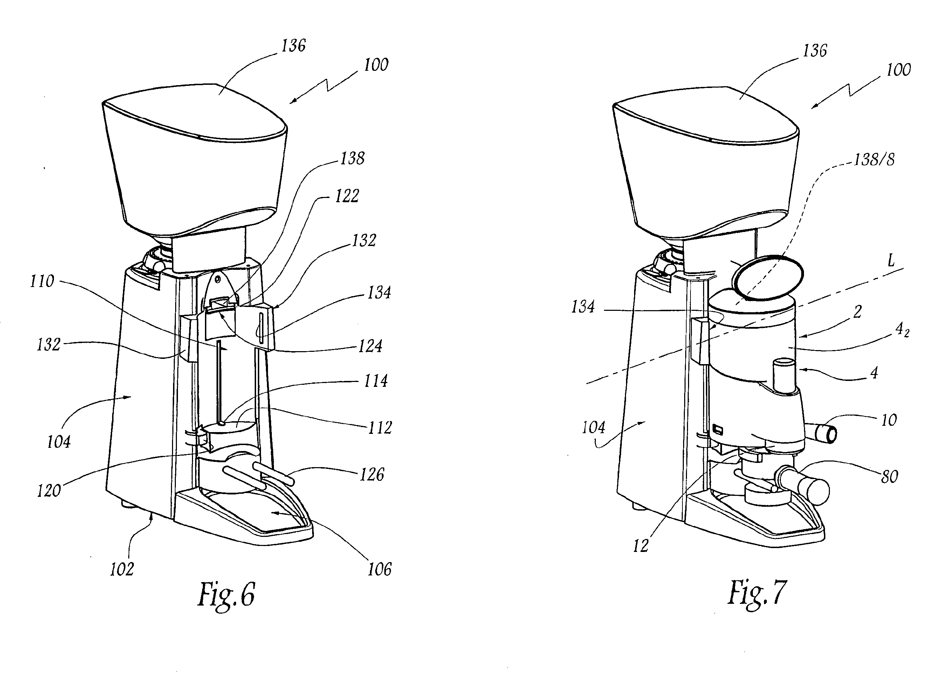

La figure 6 illustre un moulin à café, sur lequel peut être rapporté le doseur 2, de façon amovible. Ce moulin à café, désigné dans son ensemble par la référence 100, comprend une embase 102, à partir de laquelle s'étend un corps principal 104, dans lequel sont logés des moyens moteurs non représentés, de type connu en soi. On retrouve également un réceptacle amovible 106 destiné à ramasser les chutes de mouture de café, analogue à celui 56 du support 50.

Ce moulin à café 100 comporte également une plaque 110, destinée à l'accrochage du doseur 2, qui est analogue à celle 60 équipant le support 50. On retrouve ainsi une plage 112, un doigt escamotable 114, un levier de déverrouillage 120, ainsi qu'un crochet 122 définissant un interstice 124 d'introduction de la rampe 24. En outre, la plaque 110 possède un profil intérieur cylindrique, propre à coopérer avec la surface conjuguée 4' appartenant au doseur 2.

Ce moulin à café 100 est également muni d'un chariot et d'un ressort de rappel, non représentés, qui sont analogues à ceux 66 et 68 équipant le support 50. Enfin, ce moulin à café est pourvu de tiges 126, permettant la réception d'un porte-filtre.

La plaque d'accrochage 110 diffère de celle 60, en ce qu'elle est équipée de moyens 134, propres à détecter le niveau de café dans le doseur 2 comme on le verra dans ce qui suit. A titre d'exemple non limitatif, ces moyens de détection peuvent être de nature optique, infrarouge, ultra-sonore, électrique ou encore électromécanique. A titre non limitatif, ces moyens peuvent être logés par exemple dans des retours latéraux 132 de la plaque 60, ou encore dans le couvercle 6.

Ce moulin 100 possède en outre un bac 136, destiné de manière classique à la réception de grains de café non broyés. Il est par ailleurs prévu des moyens de broyage connus en soi, tels que des meules, qui ne sont pas représentés sur cette figure 6. Un passage est ménagé dans le corps du moulin 100, de manière à mettre en communication le bac 136 avec un orifice 138, permettant de délivrer du café broyé dans le doseur 2. A cet effet, une ouverture 8, creusée par exemple dans le corps 4 ou dans le couvercle 6 (figure 7), est mise en communication avec l'orifice précité 138.

Enfin, le moulin 100 est équipé d'un relais non représenté, propre à coopérer avec un aimant également non représenté, reçu dans un logement 26 ménagé dans l'embase du doseur 2 (figure 1A). Lorsque le doseur n'est pas placé sur le moulin, le relais, qui ne détecte pas la présence de l'aimant, interdit l'actionnement des moyens de broyage, ce qui est avantageux en termes de sécurité pour l'utilisateur. On notera que le logement 26 est obturé par un bouchon, de sorte qu'une extraction intempestive de l'aimant est impossible, puisqu'il est nécessaire de détruire l'ensemble du corps 4 du doseur 2, si l'on souhaite accéder à cet aimant.

Le montage du doseur 2 sur le moulin 100 s'effectue de façon analogue à celle décrite ci-dessus, en référence au montage de ce doseur sur le support 50. Il s'agit en effet de faire coopérer la rampe 24 avec le crochet 122, ainsi que le doigt 114 avec la butée 22.

L'ensemble ainsi formé, composé du doseur 2 et du moulin 100, est illustré sur la figure 7. On note, sur cette dernière, que les moyens de détection 134 sont disposés en regard du tube transparent 4₂ du doseur 2, de sorte qu'ils sont propres à détecter la présence de café dans le volume intérieur de ce doseur.

En service, lorsque les moyens 134 détectent que le niveau de café est inférieur à celui défini par une ligne fictive L, ils commandent la mise en marche des moyens moteurs, de manière à initier le broyage des grains reçus dans le bac 136. On notera que l'actionnement des meules est autorisé, car le relais du moulin détecte la présente de l'aimant placé dans le doseur.

Ces grains sont donc broyés puis la mouture est dirigée vers l'orifice 138, de sorte qu'ils sont délivrés dans le doseur 2, via l'ouverture 8 placée en regard de cet orifice 138. On conçoit donc que, au fur et à mesure de cette opération, le niveau de café a tendance à s'élever dans le doseur 2.

Puis, lorsque les moyens 134 détectent que ce niveau de café broyé a atteint cette ligne fictive L, ils commandent l'arrêt des moyens moteurs, de sorte que le broyage est stoppé. Par conséquent, au fur et à mesure de la consommation, le niveau de café dans le doseur 2 a désormais tendance à diminuer. Enfin, lorsque les moyens 134 détectent à nouveau que le niveau se situe au-dessous de la ligne fictive L, le broyage est à nouveau initié selon le cycle ci-dessus.

L'invention permet de réaliser les objectifs précédemment mentionnés.

En effet, l'invention est particulièrement avantageuse en termes de modularité, dans le domaine du broyage et du stockage de café. Il est par exemple possible d'utiliser un ensemble comprenant un moulin principal, au moins un support mural et au moins un support sur socle, ainsi que différents doseurs conformes à l'invention. Ces derniers peuvent être placés de façon sélective sur ce moulin ou sur l'un des supports, moyennant des opérations rapides et commodes à mettre en oeuvre. Il est également à souligner que les différents doseurs peuvent recevoir, soit le même type de mouture, soit des moutures différentes entre lesquelles le consommateur peut effectuer son choix.

Par ailleurs, le doseur conforme à l'invention est susceptible d'être remonté et démonté de façon simple et rapide, à la fois par rapport au moulin 100 et au support 50. Ceci est à comparer avec l'art antérieur, dans lequel il est nécessaire de disposer d'outils, si l'on veut procéder à ces opérations de montage et de démontage. Dans ces conditions, ceci permet à l'utilisateur de nettoyer ce doseur, dès qu'il le souhaite. Il est également possible de procéder à un vidage complet du doseur, de façon à changer ou à renouveler la mouture stockée.

De plus, grâce à la possibilité de mise en place rapide du doseur sur le moulin ou sur son support, ce doseur peut être conservé dans un endroit approprié, en particulier dans une enceinte réfrigérée. Ceci confère donc une grande qualité à la mouture de café stockée dans le doseur.

On notera également que, grâce à l'invention, il est possible d'assurer un changement très rapide du doseur, sans interruption du service ni intervention directe d'un réparateur. Ainsi, en remplaçant un doseur défectueux par un autre doseur en état de marche, ceci permet au cafetier de poursuivre le service, sans induire de gêne auprès des utilisateurs, en particulier durant les heures de pointe.

Quelle que soit son utilisation, c'est-à-dire qu'il soit rapporté sur un moulin ou sur un socle, le doseur présente une ergonomie similaire à celle que possèdent les doseurs classiques de l'état de la technique. Ceci n'est donc pas une source de perturbation pour les utilisateurs habituels de ce type de matériel.

## Revendications

1. Ensemble de distribution de café broyé, comprenant au moins un doseur comprenant un corps (4) de réception d'un volume de café broyé, des moyens (10) de distribution d'une dose de café et, éventuellement, des moyens (12) de tassage de cette dose ainsi qu'au moins un organe complémentaire (50, 100), sur lequel le doseur peut être fixé de façon amovible, le ou chaque organe complémentaire comportant des moyens de verrouillage complémentaires (64, 72, 114, 122) propres à coopérer avec des moyens de verrouillage rapide (22, 24), dont est pourvu le doseur (2), **caractérisé en ce qu'**au moins un organe complémentaire est un moulin à café (100), comprenant des moyens (136) de réception de grains de café non broyés, des moyens de broyage de ces grains, ainsi qu'un orifice (138) d'évacuation de café broyé, qui débouche en service dans une ouverture (8) ménagée dans le doseur (2), de manière à admettre le café broyé dans le corps (4) du doseur (2).

2. Ensemble de distribution de café broyé selon la revendication 1, **caractérisé en ce qu'**au moins un autre organe complémentaire est un support (50), propre à recevoir de façon amovible le doseur (2).

3. Ensemble de distribution de café broyé selon la revendication 1 ou 2, **caractérisé en ce que** les moyens de verrouillage rapide comprennent un élément de crochetage (24), propre à coopérer avec un élément complémentaire de crochetage (72, 122) dont est pourvu ledit organe complémentaire (50, 100).

4. Ensemble de distribution de café broyé selon la revendication 3, **caractérisé en ce que** les moyens de verrouillage complémentaire comportent une plaque d'accrochage (60, 110), qui comprend un élément complémentaire de crochetage (72, 122), propre à coopérer avec l'élément de crochetage (24) du doseur (2).

5. Ensemble de distribution de café broyé selon l'une des revendications 1 à 4, **caractérisé en ce que** les moyens de verrouillage rapide comprennent une butée (22), dont est pourvu le corps (4) du doseur (2), propre à coopérer avec un doigt (64, 114) dont est muni ledit organe complémentaire (50, 100).

6. Ensemble de distribution de café broyé selon la revendication 5, **caractérisé en ce que** le doigt (64, 114) est mobile entre une position sortie, dans laquelle il coopère avec la butée (22) dont est pourvu le corps (4) du doseur (2), et une position escamotée.

7. Ensemble de distribution de café broyé selon la revendication 6, **caractérisé en ce qu'**il est prévu des moyens de rappel du doigt (64, 114) dans sa position sortie, en particulier un ressort (68) propre à repousser un chariot (66) qui est solidaire de ce doigt (64).

8. Ensemble de distribution de café broyé selon la revendication 6 ou 7, **caractérisé en ce que** le doigt (64, 114) comprend une rampe d'introduction (64₁), propre à être repoussée par le doseur (2) afin d'escamoter ce doigt (64, 114), ainsi qu'une rampe de retenue (64₂), propre à coopérer avec la butée (22) du doseur (2).

9. Ensemble de distribution de café broyé selon l'une des revendications 6 à 8, **caractérisé en ce qu'**il est prévu des moyens (70, 120) de déverrouillage du doigt (74, 114), propres à l'amener dans sa position escamotée.

10. Ensemble de distribution de café broyé selon les revendications 4 et 9, **caractérisé en ce que** la rampe de retenue (64₂) est une rampe oblique, le long de laquelle est propre à glisser la butée (22), définissant elle aussi une rampe oblique, alors que l'élément complémentaire de crochetage (72, 122) définit une rampe oblique (72₁), le long de laquelle est propre à glisser l'élément de crochetage (24), qui définit également une rampe oblique.

11. Ensemble de distribution de café broyé selon l'une quelconque des revendications précédentes, **caractérisé en ce que** ce doseur comprend une surface d'appui (4'), notamment en forme de portion de cylindre, propre à coopérer avec une surface complémentaire (60, 110), de forme conjuguée, ménagée sur ledit organe complémentaire (50, 100), en vue du maintien mécanique mutuel de ce doseur et de cet organe complémentaire à l'égard d'efforts extérieurs.

12. Ensemble de distribution de café broyé selon l'une quelconque des revendications 1 à 11, **caractérisé en ce que** le moulin à café (100) comporte des moyens (134) de détection, propres à détecter si le niveau de café dans le doseur (2) est inférieur à une valeur prédéterminée (L), lorsque ce doseur (2) est placé sur ce moulin (100).

13. Ensemble de distribution de café broyé selon l'une quelconque des revendications 1 à 12, **caractérisé en ce qu'**il est prévu des moyens de détection de la présence du doseur (2) sur le moulin (100), propres à autoriser l'actionnement des moyens de broyage, notamment un aimant logé dans le doseur (2), qui est propre à coopérer avec un relais équipant le moulin.

14. Ensemble de distribution de café broyé selon l'une quelconque des revendications 2 à 13, **caractérisé en ce que** le ou chaque support (50) est pourvu d'un habillage (78, 78'), notamment d'un habillage arrière ou d'un habillage inférieur.

## Patentansprüche

1. Anordnung zur Zuteilung von gemahlenem Kaffee, mindestens einen Dosierer, der einen Körper (4) zur Aufnahme eines Volumens an gemahlenem Kaffee, Mittel (10) zur Zuteilung einer Dosis von Kaffee und gegebenenfalls Mittel (12) zur Verdichtung dieser Dosis umfasst, sowie mindestens ein komplementäres Element (50, 100) umfassend, auf dem der Dosierer in lösbarer Form befestigt werden kann, wobei das oder jedes komplementäre Element komplementäre Verriegelungsmittel (64, 72, 114, 122) aufweist, die geeignet sind, mit Mitteln (22, 24) zur Schnellverriegelung zusammenzuarbeiten, mit denen der Dosierer (2) versehen ist, **dadurch gekennzeichnet, dass** mindestens ein komplementäres Element eine Kaffeemühle (100) ist, die Mittel (136) zur Aufnahme von nicht gemahlenen Kaffeebohnen, Mittel zum Mahlen dieser Bohnen, sowie eine Öffnung (138) zum Abführen von gemahlenem Kaffee umfasst, die im Betrieb in eine in dem Dosierer (2) angeordnete Öffnung (8) derart mündet, das der gemahlene Kaffee dem Körper (4) des Dosierers (2) zugegeben wird.

2. Anordnung zur Zuteilung von gemahlenem Kaffee nach Anspruch 1, **dadurch gekennzeichnet, dass** mindestens ein anderes komplementäres Element ein Träger (50) ist, der geeignet ist, in lösbarer Weise den Dosierer (2) aufzunehmen.

3. Anordnung zur Zuteilung von gemahlenem Kaffee nach Anspruch 1 oder 2, **dadurch gekennzeichnet, dass** die Mittel zur Schnellverriegelung ein Verhakungselement (24) umfassen, das geeignet ist, mit einem komplementären Verhakungselement (72, 122), mit dem das komplementäre Element (50, 100) versehen ist, zusammenzuarbeiten.

4. Anordnung zur Zuteilung von gemahlenem Kaffee nach Anspruch 3, **dadurch gekennzeichnet, dass** die komplementären Verriegelungsmittel eine Verklinkungsplatte (60, 110) aufweisen, die ein komplementäres Verhakungselement (72, 122) umfasst, das geeignet ist, mit dem Verhakungselement (24) des Dosierers (2) zusammenzuarbeiten.

5. Anordnung zur Zuteilung von gemahlenem Kaffee nach einem der Ansprüche 1 bis 4, **dadurch gekennzeichnet, dass** die Mittel zur Schnellverriegelung einen Anschlag (22) umfassen, mit dem der Körper (4) des Dosierers (2) ausgestattet ist und der geeignet ist, mit einem Finger (64, 114) zusammenzuarbeiten, mit dem das komplementäre Element (50, 100) ausgerüstet ist.

6. Anordnung zur Zuteilung von gemahlenem Kaffee nach Anspruch 5, **dadurch gekennzeichnet, dass** der Finger (64, 114) zwischen einer Ausgangsstellung, in der er mit dem Anschlag (22) zusammenarbeitet, mit dem der Körper (4) des Dosierers (2) ausgestattet ist, und einer eingefahrenen Stellung beweglich ist.

7. Anordnung zur Zuteilung von gemahlenem Kaffee nach Anspruch 6, **dadurch gekennzeichnet, dass** Mittel zum Rückstellen des Fingers (64, 114) in seine Ausgangsstellung, insbesondere eine Feder (68) vorgesehen sind, die geeignet ist, einen Wagen (66), der mit diesem Finger verbunden ist, zurückzudrücken.

8. Anordnung zur Zuteilung von gemahlenem Kaffee nach Anspruch 6 oder 7, **dadurch gekennzeichnet, dass** der Finger (64, 114) eine Einführungsrampe (64₁) umfasst, die geeignet ist, von dem Dosierer (2) zurückgeschoben zu werden, um diesen Finger (64, 114) einzufahren, sowie eine Rückhalterampe (64₂), die geeignet ist, mit dem Anschlag (22) des Dosierers (2) zusammenzuarbeiten.

9. Anordnung zur Zuteilung von gemahlenem Kaffee nach einem der Ansprüche 6 bis 8, **dadurch gekennzeichnet, dass** Mittel (70, 120) zur Entriegelung des Fingers (64, 114) vorgesehen sind, die geeignet sind, ihn in seine eingefahrene Stellung zu überführen.

10. Anordnung zur Zuteilung von gemahlenem Kaffee nach den Ansprüchen 4 und 9, **dadurch gekennzeichnet, dass** die Rückhalterampe (64₂) eine schräge Rampe ist, an der entlang der Anschlag (22) geeignet ist, zu gleiten, der ebenfalls eine schräge Rampe begrenzt, wobei das komplementäre Verhakungselement (72, 122) eine schräge Rampe (72₁) begrenzt, an der entlang das Verhakungselement (24) geeignet ist, zu gleiten, das gleichfalls eine schräge Rampe begrenzt.

11. Anordnung zur Zuteilung von gemahlenem Kaffee nach einem beliebigen der vorhergehenden Ansprüche, **dadurch gekennzeichnet, dass** dieser Dosierer eine Auflagefläche (4'), insbesondere in Form eines Zylinderabschnitts, umfasst, die geeignet ist, mit einer komplementären Fläche (60, 110) in konjugierter Form, die an dem komplementären Element (50, 100) angeordnet ist, in Hinblick auf das wechselseitige mechanische Halten dieses Dosierers und dieses komplementären Elements gegen äußere Kräfte zusammenzuarbeiten.

12. Anordnung zur Zuteilung von gemahlenem Kaffee nach einem beliebigen der Ansprüche 1 bis 11, **dadurch gekennzeichnet, dass** die Kaffeemühle (100) Mittel (134) zum Detektieren aufweist, die geeignet sind zu detektieren, ob das Niveau des Kaffees in dem Dosierer (2) unterhalb eines vorbestimmten Wertes (L) ist, wenn dieser Dosierer (2) auf dieser Mühle (100) angeordnet ist.

13. Anordnung zur Zuteilung von gemahlenem Kaffee nach einem beliebigen der Ansprüche 1 bis 12, **dadurch gekennzeichnet, dass** Mittel zur Detektion des Vorhandenseins des Dosierers (2) auf der Mühle (100), die geeignet sind, die Betätigung der Mittel zum Mahlen zu gestatten, insbesondere ein Magnet, der in dem Dosierer (2) liegt und geeignet ist, mit einem die Mühle ausrüstenden Relais zusammenzuarbeiten.

14. Anordnung zur Zuteilung von gemahlenem Kaffee nach einem beliebigen der Ansprüche 2 bis 13, **dadurch gekennzeichnet, dass** der oder jeder Träger (50) mit einer Verkleidung (78, 78'), insbesondere einer hinteren Verkleidung oder einer unteren Verkleidung, versehen ist.

## Claims

1. Unit for dispensing ground coffee, comprising at least one dispenser comprising a body (4) for accommodating a volume of ground coffee, means (10) for dispensing a dose of coffee and, optionally, means (12) for packing said dose, and at least one additional component (50, 100) to which the dispenser can be removably attached, the or each additional component having complementary locking means (64, 72, 114, 122) designed to co-operate with quick locking means (22, 24) provided on the dispenser (2), **characterised in that** at least one additional component is a coffee grinder (100) comprising means (136) for accommodating non-ground coffee beans, means for grinding these beans and an orifice (138) for evacuating ground coffee which, when in service, opens into an opening (8) provided in the dispenser (2) to allow the ground coffee to pass into the body (4) of the dispenser (2).

2. Unit for dispensing ground coffee as claimed in claim 1, **characterised in that** at least one other additional component is a support (50) designed to accommodate the dispenser (2) in a detachable arrangement.

3. Unit for dispensing ground coffee as claimed in claim 1 or 2, **characterised in that** the quick locking means comprise a latching element (24) designed to co-operate with a complementary latching element (72, 122) provided on said additional component (50, 100).

4. Unit for dispensing ground coffee as claimed in claim 3, **characterised in that** the complementary locking means comprise a catch plate (60, 110) which comprises a complementary latching element (72, 122) designed to co-operate with the latching element (24) of the dispenser (2) .

5. Unit for dispensing ground coffee as claimed in one of claims 1 to 4, **characterised in that** the quick locking means comprise a stop (22) provided on the body (4) of the dispenser (2) designed to co-operate with a finger (64, 114) provided on said additional component (50, 100).

6. Unit for dispensing ground coffee as claimed in claim 5, **characterised in that** the finger (64, 114) is displaceable between an extracted position in which it co-operates with the stop (22) provided on the body (4) of the dispenser (2) and a retracted position.

7. Unit for dispensing ground coffee as claimed in claim 6, **characterised in that** it is provided with means for returning the finger (64, 114) to its extracted position, in particular a spring (68) designed to push back a carriage (66) connected to said finger (64).

8. Unit for dispensing ground coffee as claimed in claim 6 or 7, **characterised in that** the finger (64, 114) comprises an insertion ramp (64₁) designed to be pushed back by the dispenser (2) in order to retract said finger (64, 114) and a retaining ramp (64₂) designed to co-operate with the stop (22) of the dispenser (2).

9. Unit for dispensing ground coffee as claimed in one of claims 6 to 8, **characterised in that** it is provided with means (70, 120) for unlocking the finger (74, 114) designed to move it into its retracted position.

10. Unit for dispensing ground coffee as claimed in claims 4 and 9, **characterised in that** the retaining ramp (64₂) is an oblique ramp, along which the stop (22) is able to slide, it also defining an oblique ramp, whereas the complementary latching element (72, 122) defines an oblique ramp (72₁) along which the latching element (24), which also defines an oblique ramp, is able to slide.

11. Unit for dispensing ground coffee as claimed in any one of the preceding claims, **characterised in that** said dispenser comprises a support surface (4'), in particular in the form of a cylinder portion, designed to co-operate with a complementary surface (60, 110) of conjugate shape provided on said additional component (50, 100) with a view to providing mutual mechanical resistance to external forces for said dispenser and said additional component.

12. Unit for dispensing ground coffee as claimed in any one of claims 1 to 11, **characterised in that** the coffee grinder (100) comprises detection means (134) configured to detect whether the coffee level in the dispenser (2) is below a predetermined value (L) when said dispenser (2) is placed on said grinder (100).

13. Unit for dispensing ground coffee as claimed in any one of claims 1 to 12, **characterised in that** it is provided with means for detecting the presence of the dispenser (2) on the grinder (100) configured to allow the grinding means to be activated, in particular a magnet housed in the dispenser (2) which is configured to co-operate with a relay equipping the grinder.

14. Unit for dispensing ground coffee as claimed in any one of claims 2 to 13, **characterised in that** the or each support (50) is provided with a casing (78, 78'), in particular a rear casing or a bottom casing.
